# EUROPEAN PATENT APPLICATION

(11) **EP 4 589 718 A1**
(43) Date of publication of application: **23.07.2025**
(21) Application number: 22958910.6
(22) Date of filing: 24.11.2022
(51) Int. Cl.: H01M 10/42, H01M 10/48, H01M 50/502

(54) **BATTERY MODULE COMPRISING CELL CONTROLLER CONNECTED TO BATTERY CELLS**

(30) Priority: 16.09.2022 KR 20220116919
(71) Applicant: Bu Myeong Co., Ltd., Anyang-si, Gyeonggi-do 14084 (KR)
(72) Inventor: KIM, Chulhoon, Anyang-si Gyeonggi-do 14071 (KR)
(74) Representative: Patentanwaltskanzlei Matschnig & Forsthuber OG
(86) International application number: PCT/KR2022/018758
(87) International publication number: WO 2024/058308

(57) **Abstract**

A battery module includes a plurality of battery cells, a master battery management system (BMS) configured to manage the plurality of battery cells, a bus bar connecting the plurality of battery cells and electrically connected to the master BMS, and a plurality of cell controllers. The plurality of cell controllers include a first cell controller connected to the first battery cell and the second battery cell and configured to transmit a first signal including a first numeric value to the master BMS, and a second cell controller connected to the second battery cell and the third battery cell and configured to transmit a second signal including a second numeric value to the master BMS. The master BMS is configured to monitor the states of the plurality of battery cells based at least in part on the first and second signals.

## Description

### Technical Field

The present disclosure relates to a battery module including a cell controller connected to battery cells.

### Background Art

A battery module may include a plurality of battery cells that are electrically connected. The plurality of battery cells may be connected in series and/or in parallel with each other. The plurality of battery cells may age at different rates. The plurality of battery cells may be accommodated within a housing.

The battery module may include a battery management system (BMS) for monitoring the states of the plurality of battery cells. The BMS may monitor the plurality of battery cells constituting the battery module, and may transmit and/or receive data signals to/from the plurality of battery cells to control the operations of the battery cells.

### Disclosure

### Technical Problem

In order for a BMS to monitor and control each of a plurality of battery cells, the BMS and the plurality of battery cells are required to be electrically connected to each other. For example, a battery module may include wire harnesses that electrically connect the BMS and the plurality of battery cells. As the number of the plurality of battery cells constituting the battery module increases, the number and length of wire harnesses may increase. Therefore, the design of the battery module may become complicated and the weight thereof may become heavier.

The plurality of battery cells constituting the battery module may be accommodated within a housing. In order to connect additional components to the plurality of battery cells, it may be required to dismantle the housing and separate the plurality of battery cells.

The technical problems to be overcome in the present document are not limited to the technical problems mentioned above, and other technical problems not mentioned will be clearly understood by those skilled in the art to which the present invention pertains from the following description.

### Technical Solution

A battery module according to one embodiment may include a plurality of battery cells, a master battery management system (BMS), a bus bar, and a plurality of cell controllers. The plurality of battery cells may include a first battery cell, a second battery cell, and a third battery cell. The master BMS may be configured to manage the plurality of battery cells. The bus bar may connect the plurality of battery cells. The bus bar may be electrically connected to the master BMS. The plurality of cell controllers may be configured to transmit a signal, including a numeric value indicating the states of the plurality of battery cells, to the master BMS through the bus bar. The plurality of cell controllers may include a first cell controller and a second cell controller. The first cell controller may be connected to the first battery cell and the second battery cell. The first cell controller may be configured to transmit a first signal including a first numeric value indicating the state of the first battery cell and the state of the second battery cell to the master BMS through the bus bar. The second cell controller may be connected to the second battery cell and the third battery cell. The second cell controller may be configured to transmit a second signal including a second numeric value indicating the state of the second battery cell and the state of the third battery cell to the master BMS through the bus bar. The master BMS may be configured to monitor the states of the plurality of battery cells based at least in part on the first and second signals.

### Advantageous Effects

The battery module according to one embodiment may be configured such that the master BMS and each of the plurality of battery cells can communicate through the bus bar, so that separate wire harnesses can be omitted. According to one embodiment, the wire harnesses may be omitted, thereby facilitating design and also reducing weight. According to one embodiment, the plurality of cell controllers may be connected to the plurality of battery cells, which have been manufactured and assembled, without separating the battery module.

The effects that may be obtained from the present disclosure are not limited to the effects mentioned above, and other effects not mentioned may be clearly understood by those skilled in the art to which the present disclosure pertains from the following description.

### Description of Drawings

FIG. 1 is a schematic block diagram of a battery module according to an embodiment.
FIG. 2 is a schematic block diagram of a cell controller according to an embodiment.
FIG. 3 illustrates an example of a first battery cell constituting a battery module according to an embodiment.
FIG. 4 illustrates an example of a data packet of a signal transmitted and received through a cell controller of a battery module according to an embodiment.
FIG. 5 illustrates an example of an operation of transmitting and receiving a data signal of a plurality of battery cells of a battery module according to an embodiment.
FIG. 6 is a simplified block diagram of a battery module according to one embodiment.
FIG. 7 illustrates an example of operations between the master BMS and plurality of cell controllers of a battery module according to one embodiment.
FIG. 8 is a simplified block diagram of a battery module according to one embodiment.
FIG. 9 is a simplified block diagram of a battery module according to one embodiment.
FIG. 10A illustrates a battery module before a plurality of cell controllers are connected thereto.
FIG. 10B schematically illustrates a state in which a plurality of cell controllers are connected to the battery module of FIG. 10A.

### Mode for Invention

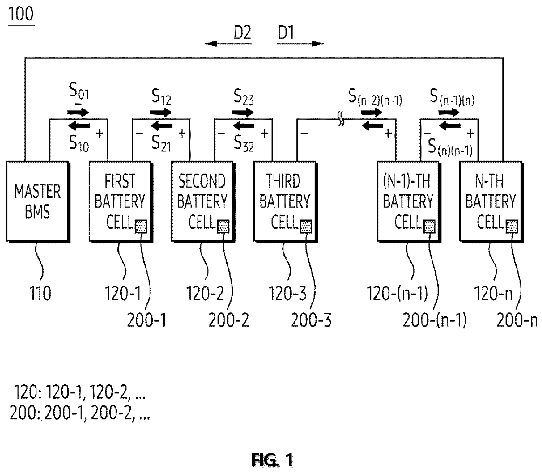

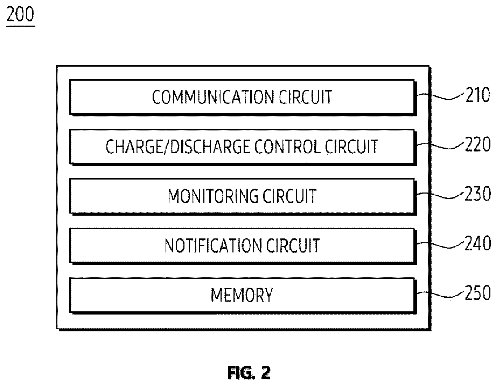

FIG. 1 is a schematic block diagram of a battery module according to an embodiment. FIG. 2 is a schematic block diagram of a cell controller according to an embodiment.

Referring to FIG. 1, a battery module 100 according to an embodiment may include a plurality of battery cells 120 connected to each other in series and a battery management system (BMS) 110 operably coupled to the plurality of battery cells 120. The plurality of battery cells 120 may be connected to each other in series to configure the battery module 100. Although not illustrated in FIG. 1, the plurality of battery cells 120 may operate as a driving source of a load by being connected with the load through an inverter or a pulse generator. A circuit described below may refer to a circuit including circuit elements interconnected to provide a specific function.

According to an embodiment, the plurality of battery cells 120 may be connected to each other in series. Referring to FIG. 1, a first battery cell 120-1 may be connected to the master BMS 110. A second battery cell 120-2 may be connected to the first battery cell 120-2. A third battery cell 120-3 may be connected to the second battery cell 120-2. According to an embodiment, the first 120-1 to nth battery cell 120-n may be sequentially connected in series in a first direction D1. For example, a negative terminal of the first battery cell 120-1 and a positive terminal of the second battery cell 120-2 may be electrically connected to each other. A negative terminal of the second battery cell 120-2 and a positive terminal of the third battery cell 120-3 may be electrically connected to each other. When the plurality of battery cells 120 are connected to each other in series, a voltage of the entire system may be set to the sum of each of the battery cells 120 constituting the plurality of battery cells 120. Although FIG. 1 illustrates that the plurality of battery cells 120 are arranged in the first direction D1, it is only for describing electrical connection of the plurality of battery cells 120, but is not limited thereto. For example, the plurality of battery cells 120 may be stacked and assembled with each other to form the battery module 100.

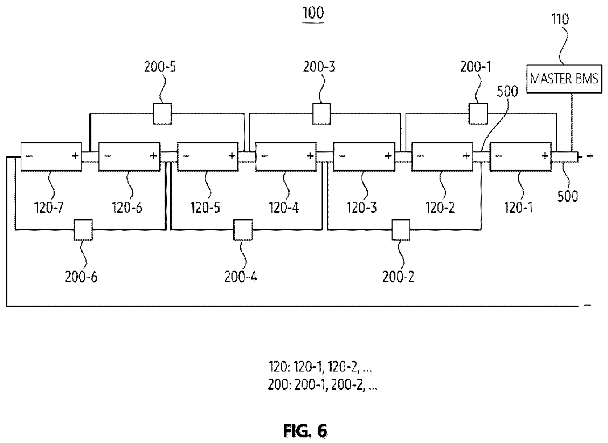

According to an embodiment, the master BMS 110 may be configured to control the overall operation of the plurality of battery cells 120. According to an embodiment, the master BMS 110 may be configured to communicate with a plurality of cell controllers 200 of the plurality of battery cells 120, via a bus bar (e.g., a bus bar 500 of FIG. 6) for connecting the plurality of battery cells 120, without a separate wire harness. The master BMS 110 may be configured to obtain information on SOH of each of the plurality of battery cells 120, via the bus bar. For example, the master BMS 110 may be configured to obtain information on the voltage and/or current of each of the plurality of battery cells 120, via the bus bar. For example, the master BMS 110 may be configured to obtain, via the bus bar, information on a state of each of the plurality of battery cells 120, such as a state of charge (SOC), a state of health (SOH), and a temperature of the plurality of battery cells 120. For example, the master BMS 110 may be configured to transmit a signal to request charging and/or discharging for each of the plurality of battery cells 120, to the plurality of cell controllers 200 disposed within the plurality of battery cells 120, via the bus bar.

According to an embodiment, the master BMS 110 may include the plurality of cell controllers 200 disposed in each of the battery cells 120 to collect information on a state of the plurality of battery cells 120. For example, the first battery cell 120-1 may include a first cell controller 200-1 disposed in the first battery cell 120-1. The second battery cell 120-2 may include a second cell controller 200-2 disposed within the second battery cell 120-2. For example, the plurality of cell controllers 200 may be disposed on a power line in the plurality of battery cells 120. The plurality of cell controllers 200 may be configured to transmit and/or receive data using a power line as a transmission medium. According to an embodiment, the plurality of battery cells 120 may transmit a signal including information on each state to the master BMS 110, by using the plurality of cell controllers 200. The master BMS 110 may transmit, to each of the plurality of battery cells 120 using the plurality of cell controllers 200, a signal to request an operation of each of the plurality of battery cells 120 and/or a signal to request information on SOH of each of the plurality of battery cells 120.

Referring to FIG. 2, the master BMS 110 may include a communication circuit 210, a charge/discharge control circuit 220, a monitoring circuit 230, a notification circuit 240, and memory 119.

According to an embodiment, the communication circuit 210 may transmit and/or receive a signal via a cell communication module 125 of the plurality of battery cells 120 and the bus bar. The communication circuit 210 may be connected to a power line for data signal transmission and power supply with the battery cells 120.

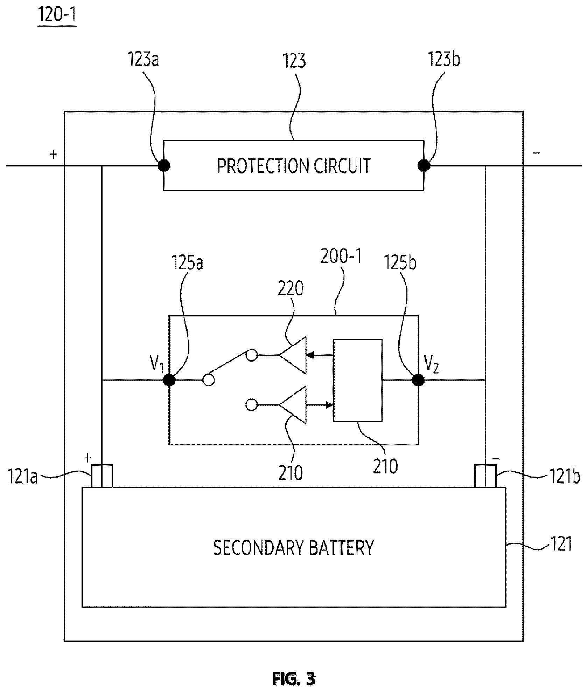

According to an embodiment, the charge/discharge control circuit 220 may control charging and/or discharging of the plurality of battery cells 120. For example, the charge/discharge control circuit 220 may perform a function of monitoring a voltage of a secondary battery (e.g., a secondary battery 121 of FIG. 3) in the plurality of battery cells 120 and a state of charge (SOC), a control function of charging and discharging of the plurality of battery cells 120, and a function for preventing over-charge and over-discharge.

According to an embodiment, the monitoring circuit 230 may be configured to monitor a state of the plurality of battery cells 120. The monitoring circuit 230 may notify the abnormality of the battery cells 120 through the notification circuit 240 when an abnormal state occurs. For example, the notification circuit 240 may be connected to a light emitting diode (LED), and a display transmitting a visual signal. For example, the notification circuit 240 may be connected to a speaker transmitting an audio signal. However, it is not limited thereto.

According to an embodiment, the memory 119 may be configured to store various information on the plurality of battery cells 120. For example, the memory 119 may store a unique ID and a state for each of the plurality of battery cells 120. For example, the memory 119 may store an ID table of battery cells 120 to be described later. For example, the memory 119 may store information on charge/discharge records, charge capacity, and remaining life of the battery cells 120.

According to an embodiment, an ID may be assigned to each of the plurality of battery cells 120. A signal transmitted from the master BMS 110 and a signal transmitted from the battery cells 120 may include information on an ID assigned to each of the plurality of battery cells 120. According to an embodiment, when a signal is received from the master BMS 110 to the plurality of cell controllers 200, the plurality of cell controllers 200 may be configured to identify information on an ID included in the signal. The plurality of cell controllers 200 may be configured to identify a battery cell to be a reception target of a signal received from the master BMS 110, based on information on the identified ID.

For example, when the master BMS 110 transmits a signal to request a specified operation to the third battery cell 120-3, the master BMS 110 may transmit a signal including information on an ID assigned to the third battery cell 120-3 to the first battery cell 120-1. The first cell controller 200-1 disposed in the first battery cell 120-1 may be configured to receive the signal and identify information on an ID included in the signal. The first cell controller 200-1 may identify that the information on an ID included in the signal does not match information on an ID assigned to the first battery cell 120-1, and transmit the signal to the second battery cell 120-2 based on the identification. The second cell controller 200-2 disposed in the second battery cell 120-2 may be configured to receive the signal, and identify information on an ID included in the signal. The second cell controller 200-2 may identify that the information on an ID included in the signal does not match information on an ID assigned to the second battery cell 120-2, and transmit the signal to the third battery cell 120-3 based on the identification. The third cell controller 200-3 disposed in the third battery cell 120-3 may be configured to receive the signal, and identify information on an ID included in the signal. The third cell controller 200-3 may identify that the information on an ID included in the signal matches the information on an ID assigned to the third battery cell 120-3, and identify a designated operation included in the signal, based on the identification. The third cell controller 200-3 may be configured to perform at least one or more operations corresponding to the designated operation, in order to perform the designated operation.

For example, when a signal including information on a state of the first battery cell 120-1 is transmitted to the master BMS 110, the master BMS 110 may identify the signal as a signal related to the first battery cell 120-1, through the information on an ID included in the signal. For example, when the plurality of battery cells 120 receive a signal including information on the charging and/or discharging of the first battery cell 120-1, the plurality of battery cells 120 may identify the signal as a signal related to the first battery cell 120-1 through the information on an ID included in the signal.

Since the battery module 100 according to an embodiment may communicate through a bus bar connecting the plurality of battery cells 120, the design for transmitting and/or receiving communication between the master BMS 110 and the plurality of battery cells 120 may be simplified.

According to an embodiment, when the master BMS 110 transmits a signal to a specific battery cell (e.g., the second battery cell 120-2), the signal may be transmitted through a battery cell (e.g., the first battery cell 120-1) other than a battery cell (e.g., the second battery cell 120-2), which is to be a reception target of the signal. In addition, when a specific battery cell (e.g., the second battery cell 120-2) transmits a signal to the master BMS 110, the signal may be transmitted to the master BMS 110 through at least another battery cell (e.g., the first battery cell 120-1).

For example, when the master BMS 110 transmits a signal to request information on a state of the third battery cell 120-3 to the third battery cell 120-3, the master BMS 110 may transmit a signal S₀₁ to the first battery cell 120-1 connected to the master BMS 110. The signal S₀₁ may be transmitted in the first direction D1. After the signal S₀₁ is transmitted to the first battery cell 120-1 connected to the master BMS 110, it may be changed into a signal S₁₂ transmitted from the first battery cell 120-1 to the second battery cell 120-2. After being transmitted to the second battery cell 120-2, the signal S₁₂ transmitted from the first battery cell 120-1 to the second battery cell 120-2 may be changed into a signal S₂₃ transmitted from the second battery cell 120-2 to the third battery cell 120-3.

For example, when the third battery cell 120-3 transmits a signal including information on a state of the third battery cell 120-3 to the master BMS 110, the signal may be transferred in a second direction D2. The signal S₃₂ transmitted from the third battery cell 120-3 to the second battery cell 120-2 may be transferred to the second battery cell 120-2. The signal S₃₂ transmitted from the third battery cell 120-3 to the second battery cell 120-2 may be changed into a signal S₂₁ transmitted from the second battery cell 120-2 to the first battery cell 120-1 after being transmitted to the second battery cell 120-2. The signal S₂₁ transmitted from the second battery cell 120-2 to the first battery cell 120-1 may be changed into the signal S₁₀ transmitted from the first battery cell 120-1 to the master BMS 110 after being transmitted to the first battery cell 120-1. The master BMS 110 may receive the signal S₁₀ and obtain information on a state of the third battery cell included in the signal S₁₀.

When a signal passes through the battery cells 120 sequentially, the strength of the signal may be reduced by impedance (e.g., a resistance inside the battery cells) inside the battery cells 120. Since the strength of a signal decreases whenever the signal passes through the battery cells 120, if the signal is transmitted through the plurality of battery cells 120, it is necessary to maintain the strength of the signal. In addition, since a collision of the signal may occur when the signal is transmitted in a different direction, it is necessary to set a transmission directionality of the signal.

FIG. 3 illustrates an example of a first battery cell constituting a battery module according to an embodiment. Hereinafter, components described with respect to a first battery cell 120-1 may be equally applied to another battery cell.

Referring to FIG. 3, the first battery cell 120-1 may include a secondary battery 121, a protection circuit 123, and a first cell controller 200-1.

According to an embodiment, the secondary battery 121 may store electrical energy. The secondary battery 121 is a secondary battery capable of charging electrical energy and discharging the charged electrical energy, and may include a negative electrode material, a positive electrode material, a separator, and an electrolyte. According to an embodiment, the first battery cell 120-1 may include at least one secondary battery 121.

According to an embodiment, a protection circuit module (PCM) 123 is a protection circuit of the secondary battery 121 capable of preventing over-discharge, over-charge, and over-current of the secondary battery 121. The over-charge of the secondary battery 121 may cause internal overheating and swelling, thereby damaging the secondary battery 121. The over-discharge of the secondary battery 121 may damage the electrode and cause a failure of the secondary battery 121. To prevent damage and/or failure of the secondary battery 121, the protection circuit 123 may block a charge circuit based on identifying that a voltage of the secondary battery 121 has reached a charging limit voltage, and may block a discharge circuit based on identifying that a voltage of the secondary battery 121 has reached a discharge limit voltage. According to an embodiment, the protection circuit 123 may obtain information on a state of the secondary battery 121 and provide the obtained information to the first cell controller 200-1.

According to an embodiment, the first cell controller 200-1 may be configured to receive a signal from the master BMS 110 or transmit a signal from the master BMS 110, by being connected between the protection circuit 123 and the secondary battery 121. For example, the first cell controller 200-1 may be connected to a power line in the first battery cell 120-1, but is not limited thereto.

According to an embodiment, the first cell controller 200-1 may obtain information on a state of the secondary battery 121 from the protection circuit 123. For example, the information on the state of the secondary battery 121 may include information on voltage, current, and temperature of the secondary battery 121, but is not limited thereto. The first cell controller 200-1 may be electrically coupled to the protection circuit 123, and may receive the information on the state of the secondary battery 121 from the protection circuit 123. The first cell controller 200-1 may be configured to transmit the received information on the state of the secondary battery 121 to the master BMS 110.

According to an embodiment, the first cell controller 200-1 may receive a signal from the master BMS 110 via a bus bar (e.g., a bus bar 500 of FIG. 6). When a signal is received from the master BMS 110 to the first cell controller 200-1, the signal is transmitted through a plurality of battery cells (e.g., the plurality of first battery cells 120-1 of FIG. 1) connected to each other, thereby reducing a strength of the signal. For example, when a signal is transmitted from the master BMS 110 to the third battery cell 120-3, the signal may be transmitted to the third battery cell 120-3 by passing through the first battery cell 120-1 and the second battery cell 120-2. When a signal is transmitted, the strength of the signal may decrease due to the impedance inside the first battery cell 120-1 and the impedance inside the second battery cell 120-2.

According to an embodiment, the first cell controller 200-1 may identify whether a target of the signal received from the master BMS 110 is the first battery cell 120-1. The signal may include information on a target ID, which is information on an ID of the first battery cell 120-1, which is to be a reception target of the signal. The first cell controller 200-1 may compare the target ID included in the signal received from the master BMS 110 with an ID assigned to the first battery cell 120-1. The first cell controller 200-1 may perform an operation corresponding to the signal, based on identifying that the target ID corresponds to the ID assigned to the first battery cell 120-1. Based on identifying that the target ID does not correspond to the ID assigned to the first battery cell 120-1, the first cell controller 200-1 may be configured to amplify the signal and then transmit the amplified signal to a second battery cell (e.g., the second battery cell 120-2 of FIG. 1) connected to the first battery cell 120-1.

For example, when a signal requesting information on a state of the first battery cell 120-1 is transmitted from the master BMS 110 to the first battery cell 120-1, the first cell controller 200-1 of the first battery cell 120-1 connected in series to the master BMS 110 may receive the signal. The signal may include information on a target ID set as an ID assigned to the first battery cell 120-1. The first cell controller 200-1 of the first battery cell 120-1 may identify a target ID included in the received signal, and identify whether the identified target ID corresponds to an ID assigned to the first battery cell 120-1. In case of identifying that the identified target ID corresponds to an ID assigned to the first battery cell 120-1, the first cell controller 200-1 may be configured to generate a signal including information on a state of the first battery cell 120-1 and transmit the generated signal to the master BMS 110.

For example, when a signal requesting information on a state of the second battery cell 120-2 is transmitted from the master BMS 110 to the second battery cell 120-2, the first cell controller 200-1 of the first battery cell 120-1 connected in series to the master BMS 110 may receive the signal. The first cell controller 200-1 of the first battery cell 120-1 may identify a target ID included in the received signal, and identify whether the identified target ID corresponds to an ID assigned to the first battery cell 120-1. In case of identifying that the identified target ID does not correspond to the ID assigned to the first battery cell 120-1, the first cell controller 200-1 may amplify the signal and then transmit the amplified signal to the second battery cell 120-2 connected in series to the first battery cell 120-1. Based on identifying that the target ID included in the signal corresponds to an ID assigned to the second battery cell 120-2, the second cell controller (e.g., the second cell controller 200-2 of FIG. 1) of the second battery cell 120-2 may generate a signal including information on a state of the second battery cell 120-2. The second cell controller 200-2 may be configured to transmit the generated signal to the master BMS 110.

Referring to FIG. 3, the first cell controller 200-1 may include a microprocessor 201 that controls transmission and/or reception of signals, an amplification circuit 202 for amplifying a signal transmitted to and/or received from the microprocessor 201, and a switch SW for controlling a transmission path of signals.

According to an embodiment, a signal transmitted to and/or received from the first cell controller 200-1 may be amplified through the amplification circuit 202 and then transmitted and/or received. When a signal is received from the outside of the first cell controller 200-1, the switch SW may provide a reception path of the signal by being closed so that the signal is received by the microprocessor 201. When a signal is transmitted from the first cell controller 200-1, the switch SW may provide a transmission path of the signal by being closed so that the signal is transmitted from the microprocessor 201.

According to an embodiment, the first cell controller 200-1 may be connected between the protection circuit 123 and the secondary battery 121. Referring to FIG. 3, the first cell controller 200-1 may include a first terminal 125a connected to a positive electrode tab 121a of the secondary battery 121 and a first terminal 123a of the protection circuit 123, and a second terminal 125b connected to a negative electrode tab 121b of the secondary battery 121 and a second terminal 123b of the protection circuit 123. A signal transmitted to the first battery cell 120-1 may be transmitted to the first cell controller 200-1 through the first end 125a of the first cell controller 200-1. The first cell controller 200-1 may identify a signal received from the master BMS 110 based on a potential difference V₂-V₁ between the second end 125b of the first cell controller 200-1 and the first end 125a of the first cell controller 200-1. For example, the first cell controller 200-1 may detect potential V₂ of the second end 125b of the first cell controller 200-1 and potential V₁ of the first end 125a of the first cell controller 200-1, identify a signal by the potential difference V₂-V₁, and receive and/or transmit the signal.

According to an embodiment, when a target ID included in the received signal does not correspond to an ID assigned to the first battery cell 120-1, the first cell controller 200-1 may apply the amplified signal to the first end 125a of the first cell controller 200-1 to transmit the signal to the second battery cell 120-2. The amplified signal applied to the first end 125a of the first cell controller 200-1 may be transmitted to the second battery cell 120-2 through the secondary battery 121. Therefore, even when the signal passes through the first battery cell 120-1, it is amplified at the first end 125a of the first cell controller 200-1, and thus the signal may maintain a certain strength while passing through the plurality of battery cells 120 connected to each other.

According to an embodiment, the battery module 100 may maintain the strength of the signal using the plurality of cell controllers 200 by the plurality of battery cells 120 connected to each other, while simplifying a transmission and/or reception structure of a communication signal between the battery cells and ensuring the stability of power supply.

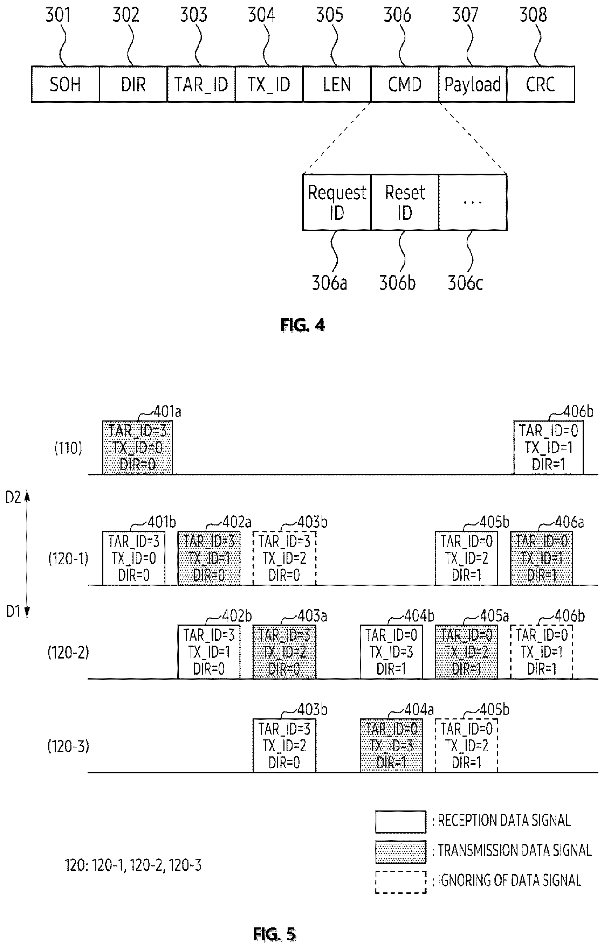

FIG. 4 illustrates an example of a data packet of a signal transmitted and received through a cell controller of a battery module according to an embodiment.

According to an embodiment, a signal transmitted and received through a plurality of cell controllers 200 of a battery module (e.g., the battery module 100 of FIG. 1) may include information for setting a directionality. Referring to FIG. 4, a data packet 300 of the signal may include information on a start of header (SOH) 301, a transmission direction of signal (DIR) 302, a target ID (TAR ID) 303, a transmit ID (TX_ID) 304, a length of string (LEN) 305, a command indicating the command of actual operation (CMD) 306, a payload 307 that is data to be transmitted, and a cyclic redundancy check (CRC) 308 for checking errors. For example, in case that the DIR 302 is 0, a transmission direction of a signal may be the first direction of FIG. 1 (e.g., the first direction D1 of FIG. 1), and in case that the DIR 302 is 1, the transmission direction of the signal may be the second direction of FIG. 1 (e.g., the second direction D2 of FIG. 1). However, it is not limited thereto. The TX_ID 304 indicates an ID assigned to a battery management system (e.g., the master BMS 110 of FIG. 1) transmitting the corresponding signal, or a plurality of battery cells (e.g., the plurality of battery cells 120 of FIG. 1). The TAR_ID 303 may indicate an ID assigned to the master BMS 110 that will receive the corresponding signal, or the plurality of battery cells 120.

According to an embodiment, the CMD 306 included in the data packet 300 may include information related to a specific operation. Referring to FIG. 4, the CMD 306 may include a packet 306a including information for requesting the assignment of an ID for each of the plurality of battery cells 120, and a packet 306b including information for requesting the reset of an ID preassigned to the plurality of battery cells 120. For example, the plurality of battery cells 120 may transmit a data signal in which 1 is inputted to the packet 306a to the master BMS 110 in order to request ID assignment. The CMD 306 may include a packet 306c including various information, in addition to the above-described packets 306a and 206b. For example, the master BMS 110 may transmit, to the first battery cell 120-1, a data signal including information requesting information on a state of a first battery cell (e.g., the first battery cell 120-1 of FIG. 1). The first battery cell 120-1 may transmit information on the state of the first battery cell 120-1 to the master BMS 110, based on receiving the data signal.

According to an embodiment, when a signal is transmitted to any one battery cell of the plurality of battery cells 120, a cell controller among the plurality of cell controllers (e.g., the plurality of cell controllers 200 of FIG. 1), which is disposed in the any one battery cell, may compare the DIR 302 with an ID assigned to the any one of the battery cells.

For example, when the DIR 302 is 0, an ID assigned to the second battery cell 120-2 does not match TAR_ID 303, and a battery cell with an ID corresponding to the TAR_ID 303 is located in a first direction D1 than a battery cell with an ID corresponding to TX_ID 304, the second cell controller 200-2 may ignore the received signal. Since the above-described example is a case in which a signal is incorrectly transmitted in a direction opposite to the transmission direction of the signal, the second cell controller 200-2 may ignore the received signal.

For example, when the DIR 302 is 1, an ID assigned to the second battery cell 120-2 does not match TAR_ID 303, and a battery cell with an ID corresponding to the TAR_ID 303 is located in a second direction D2 than a battery cell with an ID corresponding to TX_ID 304, the second cell controller 200-2 may transmit a signal in the second direction D2. As described above, the second cell controller 200-2 may amplify and then transmit a signal. In the above example, since the signal is transmitted in the transmission direction of the signal, the second cell controller 200-2 may amplify and then transmit the received signal in the second direction D2, so that the signal may be transmitted up to a battery cell with an ID matching the TAR_ID 303. The signal may be sequentially transmitted, and then transmitted up to a battery cell where the TAR_ID 303 and the ID match, and an operation corresponding to the signal may be performed in the corresponding battery cell.

For example, when an ID assigned to the second battery cell 120-2 matches the TAR_ID 303, the second cell controller 200-2 may perform a designated operation based on CMD 306 included in the data packet 300 of the signal.

According to an embodiment, in the battery module 100 including the plurality of battery cells 120 connected to each other, signal transmission and reception between the master BMS 110 and the plurality of battery cells 120 may be smoothly performed. Through a signal including information on a signal transmission direction and a target ID, the battery module 100 according to an embodiment may prevent collision of the signal due to a serial connection.

FIG. 5 illustrates an example of an operation of transmitting and receiving a data signal of a plurality of battery cells of a battery module according to an embodiment.

The operation illustrated in FIG. 5 is performed assuming that IDs are sequentially assigned to a plurality of battery cells 120 connected in series to the master BMS 110. In the operation illustrated in FIG. 5, it is assumed that an ID assigned to the master BMS 110 is 0 (ID=0), an ID assigned to the first battery cell 120-1 is 1 (ID=1), an ID assigned to the second battery cell 120-2 is 2 (ID=2), and an ID assigned to the third battery cell 120-3 is 3 (ID=3).

Referring to FIG. 5, in order to transmit a data signal to the third battery cell 120-3, the master BMS 110 may generate a data signal 401a and transmit the generated data signal 401a to the first battery cell 120-1. The data signal 401a may include information on a target ID, information on a transmission ID, and information on a transmission direction. Referring to FIG. 5, the data signal 401a may include information in which the target ID is 3, the transmission ID is 0, and the transmission direction is a first direction D1. According to an embodiment, the first battery cell 120-1 may receive a data signal 401b from the master BMS 110. A first cell controller (e.g., the first cell controller 200-1 of FIG. 1) of the first battery cell 120-1 may identify information on a target ID included in the data signal 401b and compare it with an ID assigned to the first battery cell 120-1. Since the information on the target ID included in the data signal 401b is 3, the first cell controller 200-1 of the first battery cell 120-1 may identify that the target ID does not correspond to the ID assigned to the first battery cell 120-1, and transmit a data signal 402a to the second battery cell 120-2. The data signal 402a may include information in which the target ID is 3, the transmission ID is 1, and the transmission direction is the first direction D1.

According to an embodiment, the second battery cell 120-2 may receive the data signal 402b from the first battery cell 120-1. A second cell controller (e.g., the second cell controller 200-2 of FIG. 1) of the second battery cell 120-2 may identify information on a target ID included in the data signal 402b and compare it with an ID assigned to the second battery cell 120-2. Since the information on the target ID included in the data signal 402b is 3, the second cell controller 200-2 of the second battery cell 120-2 may identify that the target ID does not correspond to the ID assigned to the second battery cell 120-2, and transmit a data signal 403a to the third battery cell 120-3. The data signal 403a may include information in which the target ID is 3, the transmission ID is 2, and the transmission direction is the first direction D1.

According to an embodiment, the third battery cell 120-3 may receive the data signal 403b from the second battery cell 120-2. A third cell controller (e.g., the third cell controller 200-3 of FIG. 1) of the third battery cell 120-3 may identify information on a target ID included in the data signal 403b and compare it with an ID assigned to the third battery cell 120-3. Since the information on the target ID included in the data signal 403b is 3, the third cell controller 200-3 of the third battery cell 120-3 may identify that the target ID corresponds to the ID assigned to the third battery cell 120-3, and perform an operation corresponding to the data signal 403b.

According to an embodiment, when the first battery cell 120-1 receives the data signal 403b from the second battery cell 120-2, the first cell controller 200-1 may check information included in the data signal 403b. Since the transmission ID included in the data signal 403b is 2 and the transmission direction is the first direction D1, the first cell controller 200-1 of the first battery cell 120-1 may ignore the data signal 403b.

According to an embodiment, the third battery cell 120-3 may perform an operation corresponding to the information included in the data signal 403b. When the information included in the data signal 403b includes a request for information on a state of the third battery cell 120-3, the third battery cell 120-3 may transmit a data signal 404a including the information on the state of the third battery cell 120-3 to the second battery cell 120-2. The data signal 404a may include information on a target ID, information on a transmission ID, and information on a transmission direction. Referring to FIG. 5, the data signal 404a may include information in which the target ID is 0, the transmission ID is 3, and the transmission direction is the second direction D2.

According to an embodiment, the second battery cell 120-2 may receive a data signal 404b from the third battery cell 120-3. The second cell controller 200-2 of the second battery cell 120-2 may identify information on a target ID included in the data signal 404b and compare it information with an ID assigned to the second battery cell 120-2. Since the information on the target ID included in the data signal 404b is 0, the second cell controller 200-2 of the second battery cell 120-2 may identify that the target ID does not correspond to the ID assigned to the second battery cell 120-2 and transmit a data signal 405a to the first battery cell 120-1. The data signal 405a may include information in which the target ID is 0, the transmission ID is 2, and the transmission direction is the second direction D2.

According to an embodiment, the first battery cell 120-1 may receive a data signal 405b from the second battery cell 120-2. The first cell controller 200-1 of the first battery cell 120-1 may identify information on a target ID included in the data signal 405b and compare it with an ID assigned to the first battery cell 120-1. Since the information on the target ID included in the data signal 405b is 0, the first cell controller 200-1 of the first battery cell 120-1 may identify that the target ID does not correspond to the ID assigned to the first battery cell 120-1 and transmit a data signal 406a to the master BMS 110. The data signal 406a may include information in which the target ID is 0, the transmission ID is 1, and the transmission direction is the second direction D2.

According to an embodiment, when the third battery cell 120-3 receives the data signal 405b from the second battery cell 120-2, the third cell controller 200-3 of the third battery cell 120-3 may check information included in the data signal 405b. Since the transmission ID included in the data signal 405b is 2 and the transmission direction is the second direction D2, the third cell controller 200-3 of the third battery cell 120-3 may ignore the data signal 405b.

According to an embodiment, the master BMS 110 may receive a data signal 406b from the first battery cell 120-1. The master BMS 110 may identify information on a target ID included in the data signal 406b and compare it with an ID assigned to the master BMS 110. Since the information on the target ID included in the data signal 406b is 0, the master BMS 110 may identify that the target ID corresponds to the ID assigned to the master BMS 110. The master BMS 110 may receive the data signal 406b.

According to an embodiment, when the second battery cell 120-2 receives the data signal 406b from the first battery cell 120-1, the second cell controller 200-2 of the second battery cell 120-2 may check information included in the data signal 406b. Since the transmission ID included in the data signal 406b is 1 and the transmission direction is the second direction D2, the second cell controller 200-2 of the second battery cell 120-2 may ignore the data signal 406b.

As described above, a signal transmission structure of a plurality of battery cells 120 connected to the master BMS 110 may be simply performed through a plurality of cell controllers (e.g., the plurality of cell controllers 200 of FIG. 1). According to an embodiment, information included in a transmitted and received signal may prevent errors in signal transmission and improve accuracy.

FIG. 6 is a simplified block diagram of a battery module according to one embodiment.

Referring to FIG. 6, the battery module according to the one embodiment may include a plurality of battery cells, a master battery management system (BMS), a bus bar, and a plurality of cell controllers. Since the descriptions given with reference to FIGS. 1 to 5 may equally be applied to the battery module 100 to be described below, redundant descriptions will be omitted.

According to one embodiment, a bus bar 500 may connect a plurality of battery cells 120. For example, when the plurality of battery cells 120 are connected in series, the bus bar 500 may connect the positive terminal of each battery cell to the negative terminal of another battery cell. Although the bus bar 500 shown in FIG. 6 is depicted in portions of a connection line between the plurality of battery cells 120, it may be disposed in the overall connection line between the plurality of battery cells 120. The bus bar 500 may be electrically connected to a master BMS 110. For example, the master BMS 110 and at least some of the plurality of battery cells 120 may be connected to each other through the bus bar 500. However, the present disclosure is not limited thereto.

According to one embodiment, the master BMS 110 may be configured to manage the plurality of battery cells 120. For example, the master BMS 110 may be configured to obtain information about each of the plurality of battery cells 120 and estimate the state of each of the plurality of battery cells 120 based on the information.

According to one embodiment, the master BMS 110 may be configured to communicate with a plurality of cell controllers 200 through the bus bar 500. The master BMS 110 may transmit signals to the plurality of cell controllers 200 through the bus bar 500, and the plurality of cell controllers 200 may transmit signals to the master BMS 110 through the bus bar 500.

According to one embodiment, the plurality of cell controllers 200 may be configured to transmit signals, including numeric values indicating the states of the plurality of battery cells 120, to the master BMS 110 through the bus bar 500. Reference may be made to the signals including the numeric values as signals including data related to the SOHs of the plurality of battery cells 120, as will be described below.

According to one embodiment, the plurality of cell controllers 200 may be connected to the plurality of battery cells 120. For example, the first cell controller 200-1 may be connected to the first battery cell 120-1 and the second battery cell 120-2. The first cell controller 200-1 may receive power for operation from the first battery cell 120-1 and the second battery cell 120-2. The second cell controller 200-2 may be connected to the second battery cell 120-2 and the third battery cell 120-3. The second cell controller 200-2 may receive power for operation from the second battery cell 120-2 and the third battery cell 120-3.

According to one embodiment, the plurality of cell controllers 200 may be configured to communicate with the master BMS 110 through the bus bar 500. For example, when the master BMS 110 transmits a signal to the second cell controller 200-2, the signal may be transmitted to the second cell controller 200-2 through the bus bar 500. A signal generated by the master BMS 110 may be transmitted to the first battery cell 120-1 through the bus bar 500. The signal may pass through the first battery cell 120-1, and may be transmitted to the second cell controller 200-2 through the bus bar 500.

For example, when the second cell controller 200-2 transmits a signal to the master BMS 110, the signal may be transmitted to the master BMS 110 through the bus bar 500. A signal generated by the second cell controller 200-2 may be transmitted to the first battery cell 120-1 through the bus bar 500. The signal may pass through the first battery cell 120-1, and may be transmitted to the master BMS 110 through the bus bar 500.

For example, when the master BMS 110 transmits a signal to the third cell controller 200-3, the signal may be transmitted through the first cell controller 200-1. A signal generated by the master BMS 110 may be transmitted to the first cell controller 200-1 through the bus bar 500. The first cell controller 200-1 may identify information about a target ID (e.g., TAR_ID 303 of FIG. 4) included in the signal. The first cell controller 200-1 may transmit the signal to the third cell controller 200-3 through the bus bar 500. However, the present disclosure is not limited thereto. For another example, the signal may be transmitted to the third cell controller 200-3 through the bus bar 500. A signal generated by the master BMS 110 may be transmitted to the first battery cell 120-1 through the bus bar 500. The signal may pass through the first battery cell 120-1, and may be transmitted to the second battery cell 120-2 through the bus bar 500. The signal may pass through the second battery cell 120-2, and may be transmitted to the third cell controller 200-3 through the bus bar 500.

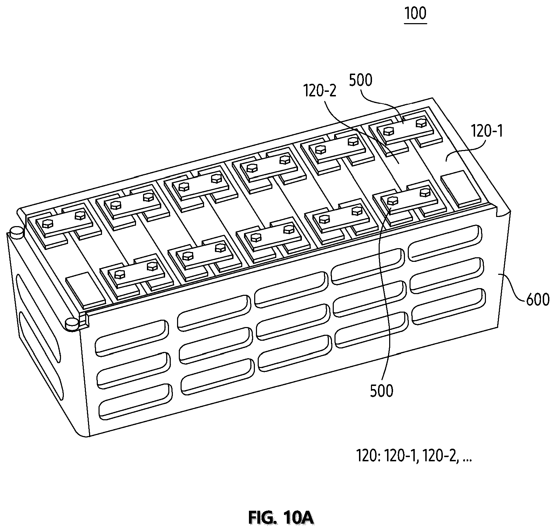

According to one embodiment, the plurality of cell controllers 200 may be connected to the outsides of the plurality of battery cells 120. For example, the plurality of battery cells 120 of the battery module 100 may be packed within a housing (e.g., the housing 600 of FIG. 10A). The plurality of battery cells 120 may be fastened to the structure of the housing 600 so that they may be fixed at designated locations within the housing 600. The plurality of cell controllers 200 may be connected to the outsides of the plurality of battery cells with the plurality of battery cells 120 packed within the housing 600. In the case of the battery module 100 including the plurality of battery cells 120 without cell controllers, the plurality of battery cells 120 may be managed by connecting the plurality of cell controllers 200 to the plurality of battery cells 120 in an ex-post manner.

According to one embodiment, the first cell controller 200-1 may be configured to obtain information about the states of the first and second battery cells 120-1 and 120-2 connected to the first cell controller 200-1. The second cell controller 200-2 may be configured to obtain information about the states of the second and third battery cells 120-2 and 120-3 connected to the second cell controller 200-2. For example, the first cell controller 200-1 may be configured to obtain data related to the deterioration of the first battery cell 120-1 and data related to the deterioration of the second battery cell 120-2.

The data related to the deterioration may refer to various types of data that quantitatively represent the degree of the SOH (state of health) of the battery cell. According to one embodiment, the first cell controller 200-1 may be configured to obtain data on at least one of changes in the SOC (state of charge) of the first and second battery cells 120-1 and 120-2 according to voltage, current, temperature, charging, and/or discharging. For example, the first cell controller 200-1 may identify a change in the state of charge (SOC) of the first and second battery cells 120-1 and 120-2 when the first and second battery cells 120-1 and 120-2 are charged. The first cell controller 200-1 may obtain data including information about a change in the SOC of the battery cell over time. For example, the first cell controller 200-1 may identify a change in the SOC of the first and second battery cells 120-1 and 120-2 when the first battery cell 120-1 is discharged. The first cell controller 200-1 may obtain data including information about a change in the SOC of the battery cell over time. For example, the first cell controller 200-1 may identify the temperatures of the first and second battery cells 120-1 and 120-2 when the first and second battery cells 120-1 and 120-2 are in operation. The first cell controller 200-1 may obtain data including information about a change in the temperature of the first and second battery cells 120-1 and 120-2 over the operation time.

According to one embodiment, the first cell controller 200-1 may be configured to transmit a first signal, including a first numeric value indicating the states of the first and second battery cells 120-1 and 120-2, to the master BMS 110 through the bus bar 500. For example, reference may be made to the first signal as data related to the deterioration of the first and second battery cells 120-1 and 120-2, as in the examples described above. The first numeric value included in the first signal may be the sum of a numeric value indicating the state of the first battery cell 120-1 and a numeric value indicating the state of the second battery cell 120-2. For example, a numeric value indicating the SOHs of a plurality of battery cells 120 may be represented by a%. In this case, a% may be a ratio that numerically represents a current state compared to the ideal state of each of the plurality of battery cells 120. For example, when the SOH of the first battery cell 120-1 is 90%, it may indicate that the current SOH of the first battery cell 120-1 is in a state of 90% compared to the state that can be expected for a new product of the first battery cell 120-1. Assuming that the SOH of the first battery cell 120-1 is al% and the SOH of the second battery cell 120-2 is a2%, the first numeric value may be (a1+a2)%. The first cell controller 200-1 may be configured to generate a first signal including (a1+a2)% and transmit the generated first signal to the master BMS 110.

According to one embodiment, the second cell controller 200-2 may be configured to transmit a second signal, including a second numeric value indicating the states of the second and third battery cells 120-2 and 120-3, to the master BMS 110 through the bus bar 500. Since the descriptions of the first cell controller 200-1 may equally be applied to the second cell controller 200-2, detailed descriptions thereof will be omitted.

According to one embodiment, the master BMS 110 may be configured to receive the first and second signals. The master BMS 110 may be configured to monitor the states of the plurality of battery cells 120 based at least in part on the received first and second signals. For example, the master BMS 110 may be configured to identify a first numeric value in the first signal and a second numeric value in the second signal and obtain information about each of the plurality of battery cells 120 through operational processes to be described below. For example, the master BMS 110 may be configured to identify the states of the first, second, and third battery cells 120-1, 120-2, and 120-3 based on the first and second numeric values.

According to one embodiment, even when the battery module 100 includes the plurality of battery cells 120 that do not include cell controllers, the battery module 100 may be connected to the plurality of cell controllers 200 in an ex-post manner. Accordingly, the plurality of battery cells 120 may be managed by the plurality of cell controllers 200 and the master BMS 110. According to one embodiment, in order to connect a cell controller, the cell controller may be connected to two or more battery cells without the need to disassemble each of the plurality of battery cells 120 and connect the cell controller. The plurality of battery cells 120 may be managed by using communication through the bus bar 500 between the master BMS 110 and the plurality of cell controllers 200. According to one embodiment, the plurality of cell controllers 200 may be applied to the already-manufactured battery module 100 in an ex-post manner.

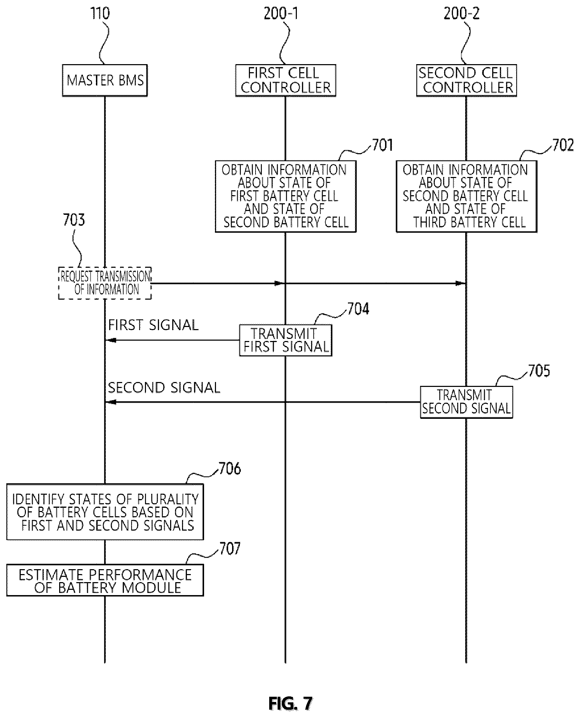

FIG. 7 illustrates an example of operations between the master BMS and plurality of cell controllers of a battery module according to one embodiment.

The operations of a first cell controller (e.g., the first cell controller 200-1 of FIG. 6) and a second cell controller (e.g., the second cell controller 200-2 of FIG. 6) described with reference to FIG. 7 may equally be applied to the cell controllers of the remaining battery cells.

In operation 701, the first cell controller 200-1 may be configured to obtain a first signal including a first numeric value indicating the state of a first battery cell (e.g., the first battery cell 120-1 of FIG. 6) and the state of a second battery cell (e.g., the second battery cell 120-2 of FIG. 6). For example, the first cell controller 200-1 may be configured to obtain data on at least one of changes in the SOC of the first and second battery cells 120-1 and 120-2 according to voltage, current, temperature, charging, and/or discharging. The first cell controller 200-1 may be configured to obtain data independently of whether the first and second battery cells 120-1 and 120-2 are activated. For example, the first cell controller 200-1 may be configured to measure the temperatures, operating voltages, and/or operating currents of the first and second battery cells 120-1 and 120-2 in the state in which the first and second battery cells 120-1 and 120-2 are activated and obtain data related to the measured temperatures, operating voltages, and/or operating currents. For example, the first cell controller 200-1 may be configured to measure the open-circuit voltages of the first and second battery cells 120-1 and 120-2 in the state in which the first and second battery cells 120-1 and 120-2 are deactivated (e.g., a sleep state, or a turn-off state) and obtain data related to the measured open-circuit voltages. The above-described data is merely exemplary, and the present disclosure is not limited thereto.

In operation 702, the second cell controller (200-2) may be configured to obtain a second signal including a second numeric value indicating the state of the second battery cell 120-2 and the state of the third cell battery cell. The descriptions for operation 701 may equally be applied to operation 702.

In operation 703, the master BMS 110 may be configured to request the transmission of the obtained first and second signals from the first and second cell controllers 200-1 and 200-2. For example, in operation 703, the master BMS 110 may transmit a signal intended to request the transmission of the obtained first and second signals to the first and second cell controllers 200-1 and 200-2. The signal may be transmitted from the master BMS 110 to the first and second cell controllers 200-1 and 200-2 through a bus bar (e.g., the bus bar 500 of FIG. 6). For example, the master BMS 110 may transmit the signal to the first and second cell controllers 200-1 and 200-2 at a cycle specified by a user. For example, the master BMS 110 may transmit the signal to the first and second cell controllers 200-1 and 200-2 when a specified event occurs.

According to one embodiment, operation 703 may be omitted. When operation 703 is omitted, the first and second cell controllers 200-1 and 200-2 may perform operations 704 and 705 even without a separate request from the master BMS 110. According to one embodiment, operation 703 may be performed based on the states of the first and second battery cells 120-1 and 120-2. According to one embodiment, the first and second cell controllers 200-1 and 200-2 may be configured to, while the first and second battery cells 120-1 and 120-2 are in operation, transmit the obtained first and second signals to the master BMS 110 through the bus bar 500 without receiving a separate request signal from the master BMS 110. When the first and second battery cells 120-1 and 120-2 are in operation, it may mean that the first and second battery cells 120-1 and 120-2 are supplying power to a load.

According to one embodiment, the master BMS 110 may be configured to, when the first and second battery cells 120-1 and 120-2 are in a turn-off state in which power is not being supplied to the load, a low-power operation state, or a sleep state, transmit a signal intended to request the transmission of the first and second signals to the first and second cell controllers 200-1 and 200-2. In the above-described case, the power consumption of the first battery cell 120-1 may need to be minimized, so that the first and second cell controllers 200-1 and 200-2 may be configured to transmit the first and second signals to the master BMS 110 based on the reception of a signal. For example, when the first and second cell controllers 200-1 and 200-2 continue to perform an operation of transmitting a signal to the master BMS 110 in a situation where driving power for the load is insufficient, a situation in which the load cannot be driven due to lack of power may occur. The first and second cell controllers 200-1 and 200-2 may minimize the power consumption of the first and second battery cells 120-1 and 120-2 attributable to the data transmission.

In operation 704, the first cell controller 200-1 may be configured to transmit the obtained first signal to the master BMS 110. For example, the first cell controller 200-1 may transmit the obtained first signal to the master BMS 110 based on the reception of a signal, requesting the transmission of the data, from the master BMS 110. For example, the first cell controller 200-1 may transmit the obtained first signal to the master BMS 110 at a cycle specified by the user. For example, the first cell controller 200-1 may transmit the obtained first signal to the master BMS 110 when a specified event occurs.

In operation 705, the second cell controller 200-2 may be configured to transmit the obtained second signal to the master BMS 110. The descriptions for operation 704 may equally be applied to operation 705.

In operation 706, the master BMS 110 may be configured to identify the states of the plurality of battery cells 120 based at least in part on the obtained first and second signals. The master BMS 110 may be configured to identify a first numeric value in the first signal and a second numeric value in the second signal and obtain information about each of the plurality of battery cells 120 through operational processes to be described below.

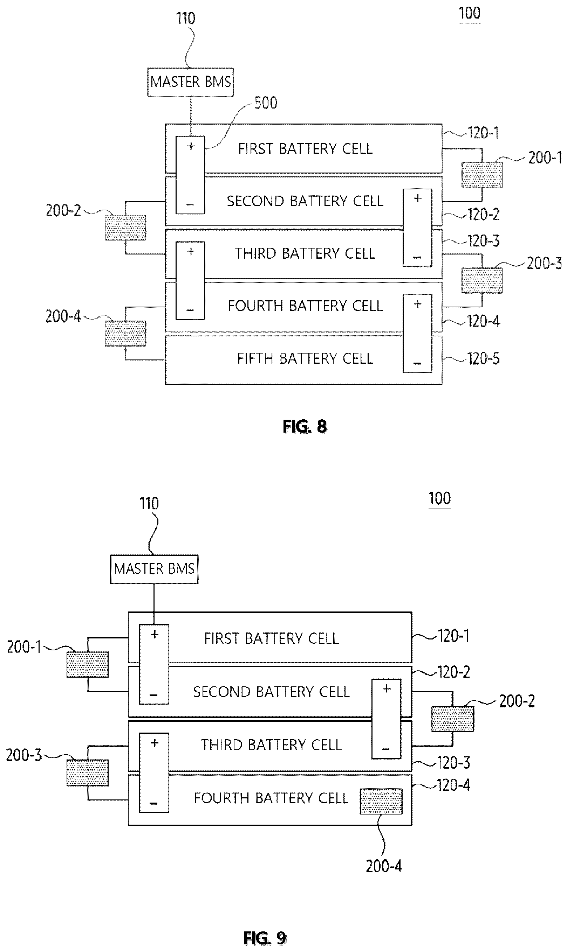

FIGS. 8 and 9 are simplified block diagrams of battery modules according to one embodiment.

A battery module 100 shown in FIG. 8 shows a first state in which a master BMS 110 can identify the states of a plurality of battery cells 120 based at least in part on first and second signals.

Referring to FIG. 8, the first cell controller 200-1 may be configured to obtain a first signal including a first numeric value a1 indicating the state of the first battery cell 120-1 and the state of the second battery cell 120-2. The first numeric value a1 may be a value a1 (= x1 + x2) obtained by adding a numeric value x1 indicating the state of the first battery cell 120-1 and a numeric value x2 indicating the state of the second battery cell 120-2. The second cell controller 200-2 may be configured to obtain a second signal including a second numeric value a2 indicating the state of the second battery cell 120-2 and the state of the third battery cell 120-3. The second numeric value a2 may be a value a2 (= x2 + x3) obtained by adding a numeric value x2 indicating the state of the second battery cell 120-2 and a numeric value x3 indicating the state of the third battery cell 120-3. The third cell controller 200-3 may be configured to obtain a signal including a third numeric value a3 indicating the state of the third battery cell 120-3 and the state of the fourth battery cell 120-4. The third numeric value a3 may be a value a3 (= x3 + x4) obtained by adding a numeric value x3 indicating the state of the third battery cell 120-3 and a numeric value x4 indicating the state of the fourth battery cell 120-4. The fourth cell controller 200-4 may be configured to obtain a second signal including a fourth numeric value a4 indicating the state of the fourth battery cell 120-4 and the state of the fifth battery cell 120-5. The fourth numeric value a4 may be a value a4 (= x4 + x5) obtained by adding a numeric value x4 indicating the state of the fourth battery cell 120-4 and a numeric value x5 indicating the state of the fifth battery cell 120-5.

According to one embodiment, according to operations 701 to 706 of FIG. 7, the master BMS 110 may be configured to receive a first signal, a second signal, a third signal, and a fourth signal. The master BMS 110 may be configured to identify the states of the first battery cell, the second battery cell 120-2, the third battery cell 120-3, the fourth battery cell 120-4, and the fifth battery cell 120-5 based on the received signals.

For example, the master BMS 110 may perform an operation to identify the state of each of the battery cells. The master BMS 110 may identify the sum (i.e., the operating voltage of the load) of the voltages of the plurality of battery cells 120 supplied to the load. The sum A (= x1 + x2 + x3 + x4 + x5) of the voltages may be a value obtained by adding the operating voltage x1 of the first battery cell 120-1, the operating voltage x2 of the second battery cell 120-2, the operating voltage x3 of the third battery cell 120-3, the operating voltage x4 of the fourth battery cell 120-4, and the operating voltage x5 of the fifth battery cell 120-5. The master BMS 110 may obtain a value B (= x1) through an operation of subtracting the second numeric value a2 (= x2 + x3) and the fourth numeric value a4 (= x4 + x5) from the above-described value A. Since the above value B may be substantially the same as the operating voltage x1 of the first battery cell 120-1, the master BMS 110 may identify the operating voltage x1 of the first battery cell 120-1. The master BMS 110 may obtain a value C (= x2) through an operation of subtracting the above value B (= x1) from the first numeric value a1 (= x1 + x2) . Since the above value C may be substantially the same as the operating voltage x2 of the second battery cell 120-2, the master BMS 110 may identify the operating voltage x2 of the second battery cell 120-2. According to one embodiment, through the above-described operational process, the master BMS 110 may identify the operating voltage of each of the first battery cell 120-1, the second battery cell 120-2, the third battery cell 120-3, the fourth battery cell 120-4, and the fifth battery cell 120-5.

According to one embodiment, the master BMS 110 may be configured to obtain numeric values indicating the state of the plurality of battery cells 120 within a first state in which the states of the plurality of battery cells 120 can be identified based at least in part on the first, second, third, and fourth signals. The master BMS 110 may identify the states of the plurality of battery cells 120 through the numeric values indicating the states of the plurality of battery cells 120. For example, the master BMS 110 may be configured to, when the operating voltage of the third battery cell 120-3 has a difference above a specified range from the operating voltages of the remaining battery cells, determine that the third battery cell 120-3 is in an abnormal state. For example, the master BMS 110 may be configured to, when the difference between the operating voltages of the plurality of battery cells 120 falls within the specified range, determine that the plurality of battery cells 120 are in a normal state. The above-described descriptions are merely exemplary, and the present disclosure is not limited thereto. For example, the numeric values may represent other parameters than operating voltages.

As described above, the master BMS 110 may be configured to monitor the states of the plurality of cells through the plurality of cell controllers 200 connected to the plurality of battery cells 120. In the case of the battery module 100 including the plurality of battery cells 120 without cell controllers, the plurality of battery cells 120 constituting the battery module 100 may be managed by connecting the plurality of cell controllers 200 in an ex-post manner.

A battery module 100 shown in FIG. 9 shows a second state in which a master BMS 110 cannot identify the states of a plurality of battery cells 120 based at least in part on a first signal and a second signal.

Referring to FIG. 9, a plurality of cell controllers 200 may further include a cell controller disposed within one of the battery cells. For example, the plurality of cell controllers may further include a fourth cell controller 200-4 configured to transmit a signal, including a numeric value indicating the state of the first battery cell 120-1 connected to the end thereof or the state of the fourth battery cell 120-4, to the master BMS 110 through the bus bar 500. Although the fourth cell controller 200-4 is shown as disposed within the fourth battery cell 120-4 in FIG. 9, the fourth cell controller 200-4 may also be disposed within the first battery cell 120-1.

The first cell controller 200-1 may be configured to obtain a first signal including a first numeric value a1 indicating the state of the first battery cell 120-1 and the state of the second battery cell 120-2. The first numeric value a1 may be a value a1 (= x1 + x2) obtained by adding a numeric value x1 indicating the state of the first battery cell 120-1 and a numeric value x2 indicating the state of the second battery cell 120-2. The second cell controller 200-2 may be configured to obtain a second signal including a second numeric value a2 indicating the state of the second battery cell 120-2 and the state of the third battery cell 120-3. The second numeric value a2 may be a value a2 (= x2 + x3) obtained by adding a numeric value x2 indicating the state of the second battery cell 120-2 and a numeric value x3 indicating the state of the third battery cell 120-3. The third cell controller 200-3 may be configured to obtain a signal including a third numeric value a3 indicating the state of the third battery cell 120-3 and the state of the fourth battery cell 120-4. The third numeric value a3 may be a value a3 (= x3 + x4) obtained by adding a numeric value x3 indicating the state of the third battery cell 120-3 and a numeric value x4 indicating the state of the fourth battery cell 120-4. The fourth cell controller 200-4 may be configured to obtain a signal including a fourth numeric value a4 indicating the state of the fourth battery cell 120-4.

According to one embodiment, according to the operations 701 to 706 of FIG. 7, the master BMS 110 may be configured to receive the first, second, third, and fourth signals. The master BMS 110 may be configured to identify the states of the first battery cell, the second battery cell 120-2, the third battery cell 120-3, and the fourth battery cell 120-4 based on the received signals.

For example, the master BMS 110 may perform an operation for identifying the state of each of the battery cells. For example, reference may be made to the above numeric values as the temperatures of the plurality of battery cells 120. The third numeric value a3 may represent a value a3 (= x3 + x4) obtained by adding the temperature x3 of the third battery cell 120-3 and the temperature x4 of the fourth battery cell 120-4. The master BMS 110 may identify the temperature x4 of the fourth battery cell 120-4 through the fourth numeric value a4 within the fourth signal a4 (= x4). The master BMS 110 may identify the temperature x3 of the third battery cell 120-3 through an operation of subtracting the fourth numeric value a4 (= x4) from the third numeric value a3 (= x3 + x4) within the third signal. The master BMS 110 may identify the temperature x2 of the second battery cell 120-2 through an operation of subtracting the temperature x3 of the third battery cell 120-3 from the second numeric value a2 (= x2 + x3) within the second signal. The master BMS 110 may identify the temperature x1 of the first battery cell 120-1 through an operation of subtracting the temperature x2 of the second battery cell 120-2 from the first numeric value a1 (= x1 + x2) within the first signal. According to one embodiment, through the above-described operation process, the master BMS 110 may identify the temperatures of the first, second, third, and fourth battery cells 120-1, 120-2, 120-3, and 120-4.

According to one embodiment, the master BMS 110 may be configured to monitor the states of the plurality of battery cells 120 based on the first, second, third, and fourth signals. For example, the master BMS 110 may be configured to, when the temperature of the third battery cell 120-3 has a difference above a specified range from the temperatures of the remaining battery cells, determine that the third battery cell 120-3 is in an abnormal state. For example, the master BMS 110 may be configured to, when the difference between the temperatures of the plurality of battery cells 120 falls within the specified range, determine that the plurality of battery cells 120 are in a normal state. The above descriptions are merely exemplary, and the present disclosure is not limited thereto. For example, the numeric values may represent other parameters than the temperatures.

As described above, at least one of the plurality of cell controllers 200 may be disposed inside any battery cell as needed. In the case of the battery module 100 including the plurality of battery cells 120 without cell controllers, each of the plurality of battery cells 120 constituting the battery module 100 may be managed by replacing one of the plurality of battery cells 120 with a battery cell including a cell controller and connecting the plurality of cell controllers 200 in an ex-post manner.

Referring back to FIG. 7, in operation 707, the master BMS 110 may be configured to estimate the performance of the battery module 100 based on the state information of the plurality of battery cells 120. For example, the master BMS 110 may be configured to estimate the SOH of each of the plurality of battery cells 120 based at least in part on the first and second signals and estimate the performance of the battery module 100 based on the estimated SOH of each of the plurality of battery cells 120.

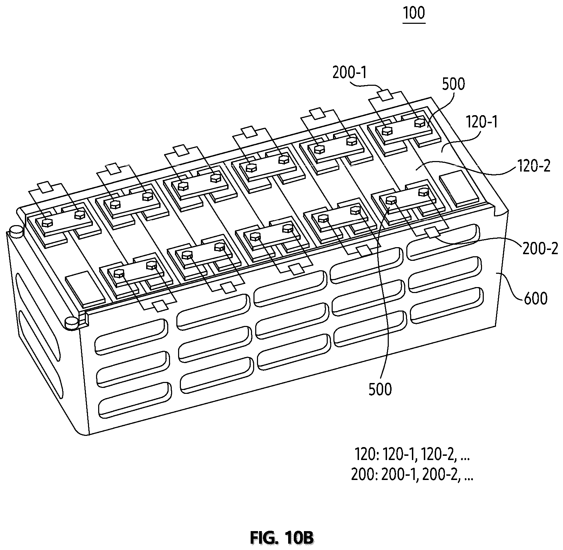

FIG. 10A illustrates a battery module before a plurality of cell controllers are connected thereto. FIG. 10B schematically illustrates a state in which a plurality of cell controllers are connected to the battery module of FIG. 10A.

Referring to FIG. 10A, a battery module 100 may include a housing 600 that accommodates a plurality of battery cells 120. The plurality of battery cells 120 may be fastened to the structure of the housing 600 so that they can be fixed at designated locations within the housing 600. The plurality of battery cells 120 may be electrically connected to each other through a bus bar 500. In the state where the plurality of battery cells 120 are packed within the housing 600, in order to dispose the plurality of cell controllers 200 for managing the plurality of battery cells 120 inside the plurality of battery cells 120, the connection structure of the housing 600 may be dismantled and the plurality of battery cells 120 may be separated from the housing 600. In the process of separating the plurality of battery cells 120, the plurality of battery cells 120 may be damaged, or the housing 600 may be damaged. For example, in the process of separating the plurality of battery cells 120, a physical shock may be applied to a battery cell. For example, due to a physical shock applied to a battery cell, the electrolyte inside the battery cell may leak.

Referring to FIG. 10B, a plurality of cell controllers 200 may be connected to the plurality of battery cells 120. The plurality of cell controllers 200 may be connected to the outsides of the plurality of battery cells 120. By connecting the plurality of cell controllers 200, a master BMS (e.g., the master BMS 110 of FIG. 6) may manage the plurality of battery cells 120, as described above. According to one embodiment, in order to connect the plurality of cell controllers 200, the plurality of cell controllers 200 may be connected to the plurality of battery cells 120 in an ex-post manner without the need to dismantle the connection structure of the housing 600 and separate each of the plurality of cell controllers 200. For example, the first cell controller 200-1 may be connected to the first battery cell 120-1 and the second battery cell 120-2. The second cell controller 200-2 may be connected to the second battery cell 120-2 and the third battery cell 120-3. The plurality of cell controllers 200 may be connected to a bus bar 500. The plurality of cell controllers 200 may be configured to obtain information about the states of one or more connected battery cells. As needed, any one of the plurality of battery cells 120 may be separated and replaced with a battery cell including a cell controller therein. According to one embodiment, even in the case of the battery module 100 including the plurality of battery cells 120 without cell controllers, the plurality of battery cells 120 constituting the battery module 100 may be managed and monitored by connecting the plurality of cell controllers 200 in an ex-post manner.

A battery module (e.g., the battery module 100 of FIG. 6) according to one embodiment may include a plurality of battery cells (e.g., the plurality of battery cells 120 of FIG. 6), a master battery management system (BMS) (e.g., the master BMS 110 of FIG. 6), a bus bar (e.g., the bus bar 500 of FIG. 6), and a plurality of cell controllers (e.g., the plurality of cell controllers 200 of FIG. 6). The plurality of battery cells may include a first battery cell (e.g., the first battery cell 120-1 of FIG. 6), a second battery cell (e.g., the second battery cell 120-2 of FIG. 6), and a third battery cell (e.g., the third battery cell 120-3 of FIG. 6). The master BMS may be configured to manage the plurality of battery cells. The bus bar may connect the plurality of battery cells. The bus bar may be electrically connected to the master BMS. The plurality of cell controllers may be configured to transmit a signal, including a numeric value indicating the states of the plurality of battery cells, to the master BMS through the bus bar. The plurality of cell controllers may include a first cell controller (e.g., the first cell controller 200-1 of FIG. 6) and a second cell controller (e.g., the second cell controller 200-2 of FIG. 6). The first cell controller may be connected to the first battery cell and the second battery cell. The first cell controller may be configured to transmit a first signal including a first numeric value indicating the state of the first battery cell and the state of the second battery cell to the master BMS through the bus bar. The second cell controller may be connected to the second battery cell and the third battery cell. The second cell controller may be configured to transmit a second signal, including a second numeric value indicating the state of the second battery cell and the state of the third battery cell, to the master BMS through the bus bar. The master BMS may be configured to monitor the states of the plurality of battery cells based at least in part on the first and second signals.

According to one embodiment, the master BMS may be configured to obtain numeric values, indicating the states of the plurality of battery cells, based on the first and second numeric values in the state in which the states of the plurality of battery cells can be identified based at least in part on the first and second signals.

According to one embodiment, the plurality of cell controllers may further include a third cell controller (e.g., the fourth cell controller 200-4 of FIG. 9). The third cell controller may be configured to transmit a third signal, including a third numeric value indicating the state of the first battery cell or the state of the third battery cell, to the master BMS through the bus bar. The master BMS may be configured to monitor the states of the plurality of battery cells based on the first, second, and third signals.

According to one embodiment, the signal indicating the states of the plurality of battery cells may include information about at least one of the states of health (SOHs) of the plurality of battery cells, the voltages of the plurality of battery cells, and the currents of the plurality of battery cells.

According to one embodiment, the master BMS may be configured to estimate the performance of the battery module, including the plurality of battery cells, based at least in part on the first and second signals.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

Various embodiments as set forth herein may be implemented as software including one or more instructions that are stored in a storage medium that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A battery module, comprising: a plurality of battery cells including a first battery cell, a second battery cell, and a third battery cell; a master battery management system (BMS) configured to manage the plurality of battery cells; a bus bar connecting the plurality of battery cells and electrically connected to the master BMS; and a plurality of cell controllers configured to transmit a signal, including a numeric value indicating states of the plurality of battery cells, to the master BMS through the bus bar,
wherein the plurality of cell controllers comprise:
a first cell controller connected to the first battery cell and the second battery cell and configured to transmit a first signal, including a first numeric value indicating a state of the first battery cell and a state of the second battery cell, to the master BMS through the bus bar; and
a second cell controller connected to the second battery cell and the third battery cell and configured to transmit a second signal, including a second numeric value indicating a state of the second battery cell and a state of the third battery cell, to the master BMS through the bus bar; and
wherein the master BMS is configured to monitor the states of the plurality of battery cells based at least in part on the first and second signals.

2. The battery module of claim 1, wherein the master BMS is configured to obtain numeric values indicating the states of the plurality of battery cells, respectively, based on the first and second numeric values within a state in which the states of the plurality of battery cells can be identified based at least in part on the first and second signals.

3. The battery module of claim 1, wherein the plurality of cell controllers further comprise a third cell controller configured to transmit a third signal, including a third numeric value indicating the state of the first battery cell or the state of the third battery cell, to the master BMS through the bus bar, and the master BMS is configured to monitor the states of the plurality of battery cells based on the first, second, and third signals.

4. The battery module of claim 1, wherein the signal indicating the states of the plurality of battery cells comprises information about at least one of states of health (SOHs), voltages, and currents of the plurality of battery cells.

5. The battery module of claim 1, wherein the master BMS is configured to estimate performance of the battery module including the plurality of battery cells based at least in part on the first and second signals.
